# EUROPEAN PATENT SPECIFICATION

(11) **EP 1 697 150 B1**
(45) Date of publication and mention of the grant of the patent: **01.04.2009**
(21) Application number: 03789260.1
(22) Date of filing: 10.12.2003
(51) Int. Cl.: B60C 1/00, C08K 5/544, C08K 5/548, C08L 19/00, C08L 21/00, C08L 23/16

(54) **CROSSLINKABLE ELASTOMERIC COMPOSITION AND TIRE FOR VEHICLE WHEELS COMPRISING THE SAME**
VERNETZBARE ELASTOMERENZUSAMMENSETZUNG UND FAHRZEUGREIFEN, DIE DIESE ENTHALTEN
COMPOSITION ELASTOMERIQUE RETICULABLE ET PNEU POUR ROUES DE VEHICULE COMPRENANT LA COMPOSITION

(43) Date of publication of application: 06.09.2006
(73) Proprietor: Pirelli & C. S.p.A., 20123 Milano (IT)
(72) Inventor: TIRELLI, Diego, c/o Pirelli Labs S.p.A., I-20126 Milano (IT); GALBUSERA, Michele, c/o Pirelli Labs S.p.A., I-20126 Milano (IT); RESMINI, Emiliano, c/o Pirelli Labs S.p.A., I-20126 Milano (IT); SERRA, Antonio, Pirelli Pneumatici S.p.A., I-20126 Milano (IT)
(74) Representative: Bottero, Claudio
(86) International application number: PCT/EP2003/014181
(87) International publication number: WO 2005/058615

(56) References cited:
- EP-A- 0 678 549
- EP-A- 1 323 774
- DATABASE CHEMABS [Online] CHEMICAL ABSTRACTS SERVICE, COLUMBUS, OHIO, US; LU, WENSHENG ET AL: "Study on properties of tire rubber powder/LLDPE blends" XP002286558 retrieved from STN Database accession no. 2003:736097 & XIANDAI SULIAO JIAGONG YINGYONG , 15(3), 6-8 CODEN: XSJYAM; ISSN: 1004-3055, 2003,
- KIM, JIN KUK ET AL: "Study on the waste tire powder/thermoplastic blends" TECHNICAL PAPERS - AMERICAN CHEMICAL SOCIETY, RUBBER DIVISION, SPRING TECHNICAL MEETING, 163RD, SAN FRANCISCO, CA, UNITED STATES, APR. 28-30, 2003 , 1350-1364 PUBLISHER: AMERICAN CHEMICAL SOCIETY, RUBBER DIVISION, AKRON, OHIO. CODEN: 69EHXX, 2003, XP009033128

## Description

### Background of the invention

The present invention relates to a crosslinkable elastomeric composition.

More particularly, the present invention relates to a crosslinkable elastomeric composition comprising at least one vulcanized rubber in a subdivided form.

The present invention moreover relates to a tire for vehicle wheels comprising at least one structural element obtained by crosslinking a crosslinkable elastomeric composition as defined above.

In a further aspect, the present invention also relates to a crosslinked manufactured product obtained by crosslinking a crosslinkable elastomeric composition as defined above.

In a still further aspect, the present invention also relates to a process for manufacturing said crosslinkable elastomeric composition.

### Prior art

The increased production of industrial rubber products has resulted in the accumulation of large amounts of rubber waster which are generally disposed in dedicated landfills with the main drawbacks of environment pollution as well as of the need for large dedicated areas for storing said wastes.

It is known in the art to depolymerize waste rubber, such as tires, in an effort to reduce the volume of waste and obtain a useful byproduct. Likewise, rubber product may be devulcanized in an attempt to recycle the waste rubber.

In addition to these techniques, if is common in the art to grind the waste rubber and utilize the ground particles so obtained. These ground particles are then typically compounded with other polymeric materials in order to make final products which may be employed in a plurality of applications.

It is already known in the art to use said ground particles as an ingredient of crosslinkable elastomeric compositions. However, the crosslinked article obtained from said elastomeric compositions generally show a significant deterioration of their mechanical properties.

Many efforts have been made in the art in order to improve the mechanical properties of the above disclosed articles.

For example, Patent US 2,378,717 relates to a process for reusing vulcanized scrap synthetic rubber comprising a vulcanizate of a copolymer of butadiene-1,3 with a lower amount of an unsaturated organic compound selected from the class consisting of acrylonitrile and styrene, which comprises: grinding said vulcanized scrap synthetic rubber; mixing it with an unvulcanized copolymer of butadiene-1,3 with a lower amount of an unsaturated organic compound selected from the class consisting of acrylonitrile and styrene; and vulcanizing the mixture. The obtained vulcanized mixture is said to have properties equal and in some cases even higher, with respect to the properties of the vulcanized mixture not containing vulcanized scrap synthetic rubber.

International Patent Application WO 88/02313 relates to a vehicle tire having a tread portion which comprises the molded and cured product of a rubber molding composition containing from about 20% by weight to about 80% by weight, preferably from about 35% by weight to about 75% by weight, of a treated particulate rubber material comprising cured rubber particles which have been surface-treated with a liquid, sulfur-curable polymeric binder having ethylenic unsaturation and which is soluble in benzene, hexane or both, the binder softening the cured rubber particle surfaces to which it is applied. Homopolymers and copolymers of 1,4-butadiene and substituted butadienes are preferred as the liquid polymeric binder. Said treated particulate rubber material is blended with a virgin stock rubber. The above mentioned tread is said to have a wear resistance which is at least as good as and often better than the wear resistance of a tread made from virgin rubber molding stock. However, the hardness, tensile strength and elongation of the above mentioned tread were adversely affected by the addition of said treated particulate rubber material.

Patent US 5,844,043 relates to a free-flowing granular crosslinkable composition made of recycled rubber granules, rubber and oil. More in particular, said crosslinkable composition consists essentially of 100 part by weight of vulcanized rubber granules intimately mixed and coated with 3-35 parts by weight of a solution of unvulcanized polyoctenamer dissolved in oil, at a temperature below the decomposition temperature of the unvulcanized polyoctenamer, and an effective amount of a vulcanizing agent. The above mentioned crosslinkable composition is said to be easily press-molded into molded bodies having good mechanical and elastic properties. Said crosslinkable composition is said to be useful, for example, for the manufacturing of floor coverings and extrudates.

European Patent Application EP 1,031,440 relates to a pneumatic tire having a rubber sidewall composition comprising: (a) from 5 to 50 parts by weight of a recycled rubber which has an individual particle size no greater than 420 µm; (b), from 0.1 to 5 parts by weight per 100 parts by weight of recycled rubber of 3,3'-tetrathiodipronic acid; and (c) 100 parts by weight of at least one additional rubber selected from the group consisting of at least one of natural and/or synthetic cis-1,4-polyisoprene rubber, cis-1,4-polybutadiene rubber, styrene/butadiene copolymer rubber, styrene/isoprene/butadiene terpolymer rubber, ethylene/propylene/diene copolymer (EPDM) rubber, acrylonitrile/butadiene copolymer rubber and 3,4-polyisoprene rubber. The above mentioned composition is said to have good mechanical properties.

Patent US 6,265,454 relates to a tire component rubber formulation, said formulation comprising rubber and additives and having blended therein up to about 50 parts by weight of recycled cured ground tire rubber particles based upon 100 total parts by weight of said tire component rubber formulation and said recycled cured ground rubber particles, wherein said recycled cured ground rubber particles replace a partial amount of said tire component rubber formulation, and wherein said recycled cured ground tire rubber particles have a size of 90 U.S. Standard Mesh or smaller. The ground particles generally replace equivalent amounts of rubber and additives (such as carbon black and oil). The above mentioned tire component is said to maintain good physical properties.

Patent US 6,407,180 relates to a process for preparing a sulfur vulcanized rubber composition comprising: (A) homogeneously blending a pre-formed composite of carbon black and tris(2-aminoethyl) amine, with a particulate, sulfur pre-vulcanized rubber (e.g. recycled cured rubber) to form a treated vulcanized rubber composition thereof; (B) mixing about 40 parts by weight of said treated pre-vulcanized rubber composition with 100 parts by weight of at least one unvulcanized rubber to form a rubber composition blend comprising said unvulcanized rubber and said treated pre-vulcanized rubber; (C) heating said rubber composition blend for a time sufficient and at a suitable temperature to vulcanize the unvulcanized rubber composition contained therein. The invention also relates to articles of manufacture, including tires, which have at least one component comprising said rubber composition. The above mentioned rubber composition is said to have accelerated cure rates at lower than conventional temperatures.

European Patent Application EP 0 678 549 relates to a rubber composition for a tire tread to be used for improving the gripping force of a studless tire, to a tire tread formed from such a rubber composition, and to a tire having such a tire tread. In order to improve the gripping force of a studless tire such a rubber composition comprises 100 parts by weight of a diene rubber containing as a main component thereof at least one rubber selected from the group consisting of natural rubber, polyisoprene and polybutadiene, and 30 to 90 parts by weight of a vulcanised rubber powder, wherein the vulcanised rubber powder is a powder of a rubber resulting from vulcanisation of a rubber composition including 100 parts by weight of a diene rubber containing as a main component thereof at least one rubber selected from the group consisting of natural rubber, polyisoprene and polybutadiene and 30 to 100 parts by weight of a clay mainly composed of kaolinite.

### Summary of the invention

The Applicant has now found that it is possible to obtain crosslinkable elastomeric compositions capable of being used advantageously in the production of crosslinked manufactured products, in particular in the production of tires, by using a vulcanized rubber in a subdivided form which has been surface treated with a silane coupling agent. In this way, it is possible to obtain crosslinked manufactured products having good mechanical properties, in particular stress at break and tensile modulus.

More in particular, the Applicant has observed that said crosslinked manufactured products show improved mechanical properties, in particular stress at break and tensile modulus, with respect to those of crosslinked manufactured products obtained from compositions in which the vulcanized rubber is used as such (i.e. not surface-treated vulcanized rubber).

Moreover, the Applicant has also observed that said crosslinked manufactured products show an improved abrasion resistance.

Furthermore, the Applicant has observed that the crosslinkable compositions of the present invention show good processability and vulcanization behavior, as shown e.g. by Mooney viscosity ML(1+4) and MDR (Moving Die Rheometer) rheometric analysis.

According to a first aspect, the present invention relates to a crosslinkable elastomeric composition as defined in attached claim 1.

According to a second aspect, the present invention relates to a tire for vehicle wheels, comprising at least one structural element obtained by crosslinking a crosslinkable elastomeric composition, as defined in attached claim 27.

According to one preferred embodiment, the present invention relates to a tire for vehicle wheels, comprising:
- a carcass structure shaped in a substantially toroidal configuration, the opposite lateral edges of which are associated with respective right-hand and left-hand bead wires to form respective beads;
- a belt structure applied in a radially external position with respect to said carcass structure;
- a tread band radially superimposed on said belt structure;
- a pair of sidewalls applied laterally on opposite sides with respect to said carcass structure;
   wherein said structural element obtained by crosslinking a crosslinkable elastomeric composition comprising:

- at least one vulcanized rubber in a subdivided form surface treated with at least one silane coupling agent;
- at least one diene elastomeric polymer;
- at least one sulfur-based vulcanizing agent;
is the tread band.

According to a further aspect, the present invention relates to a crosslinked manufactured product obtained by crosslinking a crosslinkable elastomeric composition as defined above.

According to a further aspect, said invention relates to a process for producing a crosslinkable elastomeric composition comprising the following steps:
(a) surface treating at least one vulcanized rubber in a subdivided form with at least one silane coupling agent;
(b) mixing the surface treated vulcanized rubber in a subdivided form obtained in step (a) with at least one diene elastomeric polymer;
(c) adding to the crosslinkable elastomeric composition obtained in step (b) at least one sulfur-based vulcanizing agent.

Preferably, step (a) is carried out at a temperature of from 50°C to 150°C, more preferably from 75°C to 110°C.

Preferably step (a) is carried out for a time of from 5 min to 30 min, more preferably from 8 min to 20 min.

Preferably, said vulcanized rubber in a subdivided form is heated at a temperature of from 50°C to 150°C, more preferably from 75°C to 110°C, before the addition of the silane coupling agent.

Preferably, step (b) is carried out at a temperature of from 100°C to 180°C, more preferably from 120°C to 160°C.

Preferably, step (b) is carried out for a time of from 2 min to 30 min, more preferably from 4 min to 20 min.

Preferably, step (c) is carried out at a temperature of from 80°C to 120°C, more preferably from 100°C to 110°C.

Preferably step (c) is carried out for a time of from 2 min to 30 min, more preferably from 4 min to 20 min.

The vulcanized rubber in a subdivided form which may be used in the present invention may be obtained by grinding or otherwise comminuting any source of vulcanized rubber compound such as, for example, tires, roofing membranes, hoses, gaskets, and the like, and is preferably obtained from reclaimed tires using any conventional method. For example, the vulcanized rubber in a subdivided form may be obtained by mechanical grinding at ambient temperature or in the presence of a cryogenic coolant (i.e. liquid nitrogen). Any steel or other metallic inclusions should be removed from the ground tires before use. Since the material of the present invention is preferably fiber-free, all fibrous material such as, for example, tire cord fibers, is preferably removed from the ground rubber using conventional separation methods.

According to one preferred embodiment, the vulcanized rubber in a subdivided form which may be used in the present invention, is in the form of powder or granules having a particle size not higher not higher than 5 mm.

According to a more preferred embodiment, the vulcanized rubber in a subdivided form which may be used in the present invention, has a particle size not higher than 1 mm, preferably not higher than 0.5 mm.

According to one preferred embodiment, the vulcanized rubber in a subdivided form is present in the crosslinkable elastomeric composition of the present invention in an amount of from 2 phr to 90 phr, preferably from 5 phr to 30 phr.

For the purposes of the present description and of the claims, the term "phr" means the parts by weight of a given component of the crosslinkable elastomeric composition per 100 parts by weight of the diene elastomeric polymer.

According to one preferred embodiment, the vulcanized rubber in a subdivided form which may be used in the present invention, may comprises at least one crosslinked diene elastomeric polymer or copolymer which may be selected from those commonly used in sulfur-crosslinkable elastomeric compositions, that are particularly suitable for producing tires, that is to say from elastomeric polymers or copolymers with an unsaturated chain having a glass transition temperature (T_{g}) generally below 20°C, preferably in the range of from 0°C to -110°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers in an amount of not more than 60% by weight.

The conjugated diolefins generally contain from 4 to 12, preferably from 4 to 8 carbon atoms, and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2 phenyl-1,3-butadiene, or mixtures thereof. Monovinylarenes which may optionally be used as comonomers generally contain from 8 to 20, preferably from 8 to 12 carbon atoms, and may be selected, for example, from: styrene; 1-vinylnaphthalene; 2-vinylnaphthalene; various alkyl, cycloalkyl, aryl, alkylaryl or arylalkyl derivatives of styrene such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof.

Polar comonomers which may optionally be used may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, the crosslinked diene elastomeric polymer or copolymer may be selected, for example, from: cis-1,4-polyisoprene (natural or synthetic, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

Alternatively, the vulcanized rubber in a subdivided form may comprise at least one crosslinked elastomeric polymer of one or more monoolefins with an olefinic comonomer or derivatives thereof. The monoolefins may be selected from: ethylene and α-olefins generally containing from 3 to 12 carbon atoms, such as, for example, propylene, 1-butene, 1-pentene, 1-hexene, 1-octene, or mixtures thereof. The following are preferred: copolymers between ethylene and an α-olefin, optionally with a diene; isobutene homopolymers or copolymers thereof with small amounts of a diene, which are optionally at least partially halogenated. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

According to one preferred embodiment, the diene elastomeric polymer which may be used in the present invention may be selected from those commonly used in sulfur-crosslinkable elastomeric compositions, that are particularly suitable for producing tires, that is to say from elastomeric polymers or copolymers with an unsaturated chain having a glass transition temperature (T_{g}) generally below 20°C, preferably in the range of from 0°C to -110°C, which have been already disclosed above.

Preferably, the diene elastomeric polymer or copolymer may be selected, for example, from: cis-1,4-polyisoprene (natural or synthetic, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

The crosslinkable elastomeric composition according to the present invention may optionally comprises at least one elastomeric polymer of one or more monoolefins with an olefinic comonomer or derivatives thereof, which have been already disclosed above. Among these, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

A diene elastomeric polymer or copolymer or an elastomeric polymer selected from those above disclosed which has been functionalized by reaction with at least one suitable terminating agent or coupling agent may also be used. In particular, the diene elastomeric polymers or copolymers obtained by anionic polymerization in the presence of an organometallic initiator (in particular an organolithium initiator) may be functionalized by reacting the residual organometallic groups derived from the initiator with at least one suitable terminating agent or coupling agent selected, for example, from: imines, carbodiimides, alkyltin halides, substituted benzophenones, alkoxysilanes or aryloxysilanes (see, for example, European Patent EP 451,604, or Patents US 4,742,124 and US 4,550,142).

According to one preferred embodiment, the silane coupling agent which may be used in the present invention, may be selected from sulfide silane compounds having the following formula (I):

Z-Alk-Sₙ-Alk-Z (I)

wherein Z is selected from the following groups: -Si(R₁)₂(R₂), -Si(R₁)(R₂)₂ and -Si(R₂)₃, in which R₁ is a C₁-C₄ alkyl group, a cyclohexyl group or a phenyl group and R₂ is a C₁-C₁₈ alkoxy group or a C₅-C₈ cycloalkoxy group; Alk is a divalent hydrocarbon containing from 1 to 18 carbon atoms and n is a number from 2 to 8.

Specific examples of compounds having formula (I) are: 3,3'-bis(trimethoxysilylpropyl) disulfide, 3,3'-bis(triethoxysilylpropyl) tetrasulfide, 3,3'-bis-(triethoxysilylpropyl) octasulfide, 3,3'-bis(tri-methoxysilylpropyl) tetrasulfide, 2,2'-bis(triethoxy-silylethyl) tetrasulfide, 3,3'-bis(trimethoxysilylpropyl) trisulfide, 3,3'-bis(triethoxysilylpropyl) trisulfide, 3,3'-bis(tributoxysilylpropyl) disulfide, 3,3'-bis(trimethoxysilylpropyl) hexasulfide, 3,3'-bis(trimethoxysilylpropyl) octasulfide, 3,3'-bis(trioctoxysilylpropyl) tetrasulfide, 3,3'-bis(triethoxysilylpropyl) disulfide, 3,3'-bis(tri-2-ethylhexoxysilylpropyl) trisulfide, 3,3'-bis(triisooctoxysilylpropyl) tetrasulfide, -3,3'-bis(tri-t-butoxysilylpropyl) disulfide, 2,2'-bis(methoxydiethoxysilylethyl) tetrasulfide, 2,2'-bis(tripropoxysilylethyl) pentasulfide, 3,3'-bis(tricyclohexoxysilylpropyl) tetrasulfide, 3,3'-bis(tricyclopentoxysilylpropyl) trisulfide, 2,2'-bis(tri-2-methylcyclohexoxysilylethyl) tetrasulfide, bis(trimethoxysilylmethyl) tetrasulfide, 3-methoxyethoxypropoxysilyl-3'-diethoxybutoxysilylpropyl tetrasulfide, 2,2'-bis(dimethylmethoxysilylethyl) disulfide, 2,2'-bis(dimethyl-S-butoxysilylethyl) trisulfide, 3,3'-bis(methylbutylethoxysilylpropyl) tetrasulfide, 3,3'-bis(di-t-butylmethoxysilylpropyl) tetrasulfide; 2,2'-bis(phenylmethylmethoxysilylethyl) trisulfide, 3,3'-bis(diphenylisopropoxysilylpropyl) tetrasulfide, 3,3'-bis(diphenylcyclohexoxysilylpropyl) disulfide, 3,3'-bis(dimethylethylmercaptosilylpropyl) tetrasulfide, 2,2'-bis(methyldimethoxysilylethyl) trisulfide, 2,2'-bis(methylethoxypropoxysilylethyl) tetrasulfide, 3,3'-bis(diethylmethoxysilylpropyl) tetrasulfide, 3,3'-bis(ethyldi-S-butoxysilylpropyl) disulfide, 3,3'-bis(propyldiethoxysilylpropyl) disulfide, 3,3'-bis(butyldimethoxysilylpropyl) trisulfide, 3,3'-bis(phenyldimethoxysilylpropyl) tetrasulfide, 3-phenylethoxybutoxysilyl-3'-trimethoxysilylpropyl tetrasulfide, 4,4'-bis(trimethoxysilylbutyl) tetrasulfide, 6,6'-bis(triethoxysilylhexyl) tetrasulfide, 12,12'-bis(triisopropoxysilyldodecyl) disulfide, 18,18'-bis(trimethoxysilyloctadecyl) tetrasulfide, 18,18'-bis(tripropoxysilyloctadecenyl) tetrasulfide, 4,4'-bis(trimethoxysilylbuten-2-yl) tetrasulfide, 4,4'-bis(trimethoxysilylcyclohexylene) tetrasulfide, 5,5'-bis(dimethoxymethylsilylpentyl) trisulfide, 3,3'-bis(trimethoxysilyl-2-methylpropyl) tetrasulfide, 3,3'-bis(dimethoxyphenylsilyl-2-methylpropyl) disulfide, or mixture thereof. 3,3'-bis(triethoxysilylpropyl) tetrasulfide is preferred according to the present invention. An example of a sulfide silane compound which may be used in the present invention and which is currently commercially available is the product X50S^{®} from Degussa.

According to a further preferred embodiment, the silane coupling agent which may be used in the present invention, may be selected from aminosilane compounds having the following formula (II): 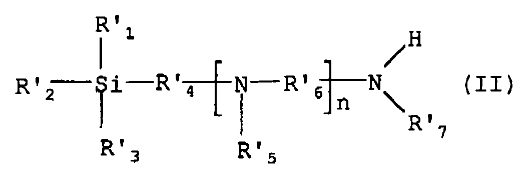 wherein:
- R'₁, R'₂ and R'₃, which may be identical or different, are selected from hydrogen, C₁-C₈ alkoxy groups, C₁-C₁₈ alkyl groups, C₆-C₂₀ aryl groups, C₇-C₃₀ alkylaryl or arylalkyl groups, on condition that at least one of the groups R'₁, R'₂ and R'₃ represents an alkoxy group;
- R'₄ is selected from C₁-C₈ alkylene groups, C₆-C₂₀ arylene groups, said arylene groups optionally being substituted with C₁-C₈ alkyl groups;
- R'₅ and R'₇, which may be identical or different, are selected from hydrogen, C₁-C₁₈ alkyl groups; or, when R'₅ and R'₇ are other than hydrogen, they may form, together with the nitrogen atoms to which they are attached, 5- or 6-membered heterocyclic rings;
- R'₆ is selected from C₁-C₁₈ alkylene groups, C₆-C₁₄ arylene groups, arylene groups optionally substituted with C₁-C₁₈ alkyl groups, C₇-C₃₀ alkylenearylene or arylenealkylene groups, C₃-C₃₀ cycloalkylene groups, said cycloalkylene groups optionally being substituted with C₁-C₁₈ alkyl groups;
- n is a integer from 0 to 5 inclusive.

Preferably, R'₁, R'₂ and R'₃ are C₁-C₃ alkoxy groups, R'₄ is a C₁-C₃ alkylene group, R'₇ is hydrogen and n is 0.

Specific examples of aminosilanes having formula (II) are: 2-trimethoxysilylethylamine, 2-triethoxysilylethylamine, 2-tripropoxysilylethylamine, 2-tributoxy-silylethylamine, 3-trimethoxysilylpropylamine, 3-tri-ethoxysilylpropylamine, 3-tripropoxysilylpropylamine, 3-triisopropoxysilylpropylamine, 3-tributoxysilylpropylamine, 4-trimethoxysilylbutylamine, 4-triethoxy-silylbutylamine, 4-tripropoxysilylbutylamine, 4-tri-butoxysilylbutylamine, 5-trimethoxysilylpentylamine, 5-triethoxysilylpentylamine, 5-tripropoxysilylpentyl-amine, 5-tributoxysilylpentylamine, amine, 5-tributoxysilylpentylamine, 6-trimethoxysilylhexylamine, 6-triethoxysilylhexylamine, 6-tripropoxy-silylhexylamine, 6-tributoxysilylhexylamine, 7-tri-methoxysilylheptylamine, 7-triethoxysilylheptylamine, 7-tripropoxysilylheptylamine, 7-tributoxysilylheptyl-amine, 8-trimethoxysilyloctylamine, 8-triethoxysilyl-octylamine, 8-tripropoxysilyloctylamine, 8-tributoxy-silyloctylamine, N-(2-aminoethyl)-3-aminopropylmethyldimethoxysilane, N-(2-aminoethyl)-3-aminopropyltri-methoxysilane, 1-[3-(trimethoxysilyl)propyl]piperazine, N-[3-(trimethoxysilyl)propyl]-1,4-bis(3-aminopropyl)-piperazine, N-(3-aminopropyl)-3-aminopropyltrimethoxy-silane, N-(4-aminobutyl)-3-aminopropyltrimethoxysilane, N-[3-(trimethoxysilyl)propyl]-1,3-bis(aminomethyl)-cyclohexane, N-[3-(trimethoxysilyl)propyl]-4,4'-di-aminodiphenylmethane, N-[3-(trimethoxysilyl)propyl]-1,2-diaminocyclohexane, N-[3-(trimethoxysilyl)propyl]-1,4-diaminobutane, N-[3-(trimethoxysilyl)propyl]-2,4-diaminotoluene, N-(2-aminoethyl)-N'-[3-(trimethoxysilyl)propyl]-1,3-propanediamine, N-[2-[[3-(trimethoxysilyl)propyl]amino]ethyl]-1,3-propanediamine, N-(3-aminopropyl)-N'-[3-[[3-(trimethoxysilyl)propyl]amino]propyl]-1,2-ethanediamine, N-(2-aminoethyl)-N'-[2-[[3-(trimethoxysilyl)propyl]amino]ethyl]-1,3-propanediamine, N-(3-aminopropyl)-N'-[3-[[3-(trimethoxysilyl)propyl]amino]propyl]-1,2-butanediamine, or mixture thereof. 3-triethoxysilylpropylamine is preferred according to the present invention. An example of an aminosilane compound which may be used in the present invention and which is currently commercially available is the product Dynasylan^{®} AMEO (A-1100) from Sivento-Chemie.

According to a further preferred embodiment, the silane coupling agent which may be used in the present invention, may be selected from vinylsilane compounds having the following formula (III):

RSiR'ₙY₃₋ₙ (III)

wherein:
- R represents an alkenyl group or an alkenyloxy group;
- R' represents an hydrogen atom or an alkyl group;
- Y represents a hydrolizable organic group; and
- n is 0, 1 or 2.

Specific example of alkenyl groups represented by R are: vinyl, allyl, isopropenyl, butenyl, ciclohexenyl, cyclopentanedienyl.

Specific examples of akenyloxy groups represented by R are; vinyloxy, allyloxy.

Specific examples of hydrolizable organic groups represented by Y are: methoxy, ethoxy, formyloxy, acetoxy, propionyloxy, alkylamino, arylamino.

Specific examples of alkyl group represented by R' are: methyl, ethyl, propyl, decyl.

When n is 2, the R' groups may be the same or different.

Specific example of vinylsilane compounds having formula (III) are: vinyltrimethoxysilane, vinyl-triethoxysilane, vinyltriacetoxysilane, vynildimethoxymethylsilane, vinyldiethoxymethylsilane, vinylmethoxy-dimethylsilane, vinylethoxydimethylsilane, their oligomers, or mixture thereof. Oligomeric vinyltriethoxysilane is preferred according to the present invention. An example of an oligomeric vinylsilane compound which may be used in the present invention and which is currently commercially available is the product Dynasylan® 6498 from Sivento-Chemie.

According to a further preferred embodiment, the silane coupling agent which may be used in the present invention, may be selected from mercaptosilane compounds having the following formula (IV): 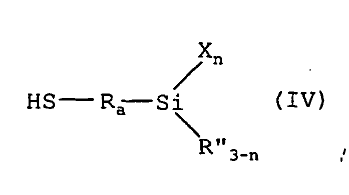 wherein:
- X represents an halogen atom selected from chlorine, bromine, iodine, fluorine, preferably chlorine, a C₁-C₈ alkoxy group;
- Rₐ represents a C₁-C₁₀ alkylene group;
- R" represents a C₁-C₃₀ alkyl group, a C₇-C₃₀ alkylaryl or arylalkyl group, a C₅-C₃₀ cycloaliphatic group, a C₆-C₂₀ aromatic group;
- n is an integer from 1 to 3 inclusive.

Preferably X represents a C₁-C₃ alkoxy group, Rₐ represents a C₁-C₃ alkylene group, and n is 3.

Specific example of mercaptosilane compounds having formula (IV) are: 1-mercaptomethyltriethoxysilane, 2-mercaptoethyltriethoxysilane, 3-mercaptopropyltrimethoxysilane, 3-mercaptopropyltriethoxysilane, 3-mercaptopropylmethyldiethoxysilane, or mixture thereof. 3-mercaptopropyltrimethoxysilane is preferred according to the present invention. An example of a mercaptosilane compound which may be used in the present invention and which is currently commercially available is the product VP Si® 163 from Degussa.

According to a further preferred embodiment, the silane coupling agent which may be used in the present invention, may be selected from epoxysilane compounds such as, for example, 3-glycidyloxypropyltrimethoxysilane, 3-glycidyloxypropylmethyldimethoxysilane, 2-(3,4 epoxycyclohexyl)ethyltrimethoxysilane, or mixture thereof. 3-glycidyloxypropyltrimethoxysilane is preferred according to the present invention. An example of an epoxysilane compound which may be used in the present invention and which is currently commercially available is the product Dynasylan® GLYMO (A 187) from Sivento-Chemie.

According to one preferred embodiment, the vulcanized rubber in a subdivided form is surface treated with an amount of at least one silane coupling agent of from 0.1% by weight to 5% by weight, preferably from 0.2% by weight to 3% by weight, said amount being expressed with respect to the total weight of the vulcanized rubber in a subdivided form + the silane coupling agent

Preferably, the surface treatment of the vulcanized rubber in a subdivided form may be carried out in a mixing device known in the art such as, for example, a ribbon blender or a turbo-mixer.

According to one preferred embodiment, the sulfur-based vulcanizing agent may be selected from sulfur or derivatives thereof such as, for example:
- soluble sulfur (crystalline sulfur);
- insoluble sulfur (polymeric sulfur);
- sulfur dispersed in oil (for example a dispersion of 33% sulfur in oil known under the trade name Crystex® OT33 from Flexsys);
- sulfur donors such as, for example, tetramethylthiuram disulfide (TMTD), tetrabenzylthiuram disulfide (TBzTD), tetraethylthiuram disulfide (TETD); tetrabutylthiuram disulfide (TBTD), dimethyldiphenylthiuram disulfide (MPTD), pentamethylenethiuram tetrasulfide or hexasulfide (DPTT), morpholinobenzothiazole disulfide (MBSS), N-oxydiethylenedithiocarbamyl-N'-oxydiethylene-sulphenamide (OTOS), dithiodimorpholine (DTM or DTDM), caprolactam disulfide (CLD).

Said sulfur-based vulcanizing agent is present in the crosslinkable elastomeric composition of the present invention in an amount generally of from 0.5 phr to 5 phr, preferably from 1 phr to 3 phr.

At least one reinforcing filler may be advantageously added to the crosslinkable elastomeric composition of the present invention, in an amount generally of from 0.1 phr to 120 phr, preferably from 20 phr to 90 phr. The reinforcing filler may be selected from those commonly used for crosslinked manufactured products, in particular for tires, such as, for example, carbon black, silica, alumina, aluminosilicates, calcium carbonate, kaolin, or mixtures thereof.

The types of carbon black which may be used in the present invention may be selected from those conventionally used in the production of tires, generally having a surface area of not less than 20 m²/g (determined by CTAB absorption as described in Standard ISO 6810:1995).

The silica which may be used in the present invention may be, generally, a pyrogenic silica or, preferably, a precipitated silica, with a BET surface area (measured according to Standard ISO standard 5794-1:1994) of from 50 m²/g to 500 m²/g, preferably from 70 m²/g to 200 m²/g.

When a reinforcing filler comprising silica is present, the crosslinkable elastomeric composition may advantageously incorporate a silica coupling agent capable of interacting with the silica and of linking it to the elastomeric base during the vulcanization.

Silica coupling agents that are preferably used are those based on silane which have been already disclosed above. Among the silica coupling agents that are particularly preferred are bis(3-triethoxysilylpropyl) tetrasulfide and bis(3-triethoxysilylpropyl) disulfide. Said coupling agents may be used as such or as a suitable mixture with an inert filler (for example carbon black) so as to facilitate their incorporation into the crosslinkable elastomeric composition.

Preferably, when silica is present, the vulcanized rubber in subdivided form is surface pre-treated with the coupling agent according to the present invention, i.e. the vulcanized rubber in subdivided form is treated with the coupling agent before combining it with the silica-containing elastomeric composition. In that way, possible competitive interactions between the coupling agent and the silica are avoided, so as to provide an effective amount of coupling agent on the surface of the vulcanized rubber.

The crosslinkable elastomeric composition of the present invention may be vulcanized according to known techniques. To this end, in the composition, after a first stage of thermal-mechanical processing, a sulfur-based vulcanizing agent is incorporated together with vulcanization accelerators and activators. In this second processing stage, the temperature is generally kept below 120°C and preferably below 100°C, so as to avoid any unwanted pre-crosslinking phenomena.

Activators that are particularly effective are zinc compounds, and in particular ZnO, ZnCO₃, zinc salts of saturated or unsaturated fatty acids containing from 8 to 18 carbon atoms, such as, for example, zinc stearate, which are preferably formed in situ in the elastomeric composition from ZnO and fatty acid, and also BiO, PbO, Pb₃O₄, PbO₂, or mixtures thereof.

Accelerators that are commonly used may be selected from: dithiocarbamates, guanidine, thiourea, thiazoles, sulfenamides, thiurams, amines, xanthates, or mixtures thereof.

The crosslinkable elastomeric composition according to the present invention may comprise other commonly used additives selected on the basis of the specific application for which the composition is intended. For example, the following may be added to said composition: antioxidants, anti-aging agents, plasticizers, adhesives, anti-ozone agents, modifying resins, fibers (for example Kevlar® pulp), or mixtures thereof.

In particular, for the purpose of further improving the processability, a plasticizer generally selected from mineral oils, vegetable oils, synthetic oils, or mixtures thereof, such as, for example, aromatic oil, naphthenic oil, phthalates, soybean oil, or mixtures thereof, may be added to the crosslinkable elastomeric composition according to the present invention. The amount of plasticizer generally ranges from 2 phr to 100 phr, preferably from 5 phr to 50 phr.

The crosslinkable elastomeric composition according to the present invention may be prepared by mixing together the polymeric components, the surface treated vulcanized rubber in a subdivided form and the sulfur-based vulcanizing agent, with the reinforcing filler optionally present and with the other additives according to techniques known in the art. The mixing may be carried out, for example, using an open mixer of open-mill type, or an internal mixer of the type with tangential rotors (Banbury) or with interlocking rotors (Intermix), or in continuous mixers of Ko-Kneader type (Buss) or of co-rotating or counter-rotating twin-screw type.

### Brief description of the drawing

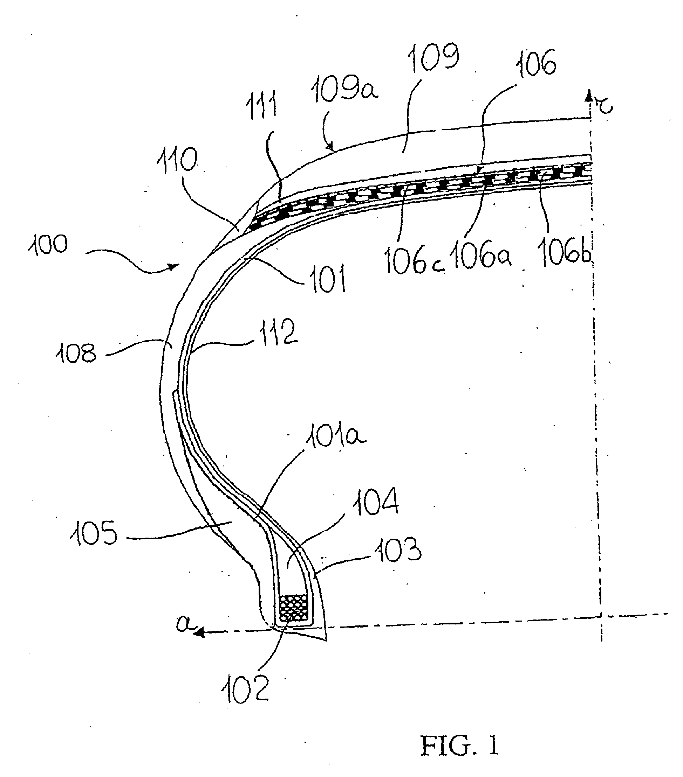

The present invention will now be illustrated in further detail by means of an illustrative embodiment, with reference to the attached Fig. 1, which is a view in cross section of a portion of a tire made according to the invention.

"a" indicates an axial direction and "r" indicates a radial direction. For simplicity, Fig. 1 shows only a portion of the tire, the remaining portion not represented being identical and symmetrically arranged with respect to the radial direction "r".

### Detailed description of the preferred embodiments

The tire (100) comprises at least one carcass ply (101), the opposite lateral edges of which are associated with respective bead wires (102). The association between the carcass ply (101) and the bead wires (102) is achieved here by folding back the opposite lateral edges of the carcass ply (101) around the bead wires (102) so as to form the so-called carcass back-folds (101a) as shown in Fig. 1.

Alternatively, the conventional bead wires (102) can be replaced with a pair of annular inserts formed from elongate components arranged in concentric coils (not represented in Fig. 1) (see, for example, European Patent Applications EP 928,680 and EP 928,702). In this case, the carcass ply (101) is not back-folded around said annular inserts, the coupling being provided by a second carcass ply (not represented in Fig. 1) applied externally over the first.

The carcass ply (101) generally consists of a plurality of reinforcing cords arranged parallel to each other and at least partially coated with a layer of elastomeric compound. These reinforcing cords are usually made of textile fibers, for example rayon, nylon or polyethylene terephthalate, or of steel wires stranded together, coated with a metal alloy (for example copper/zinc, zinc/manganese, zinc/molybdenum/cobalt alloys, and the like).

The carcass ply (101) is usually of radial type, i.e. it incorporates reinforcing cords arranged in a substantially perpendicular direction relative to a circumferential direction. Each bead wire (102) is enclosed in a bead (103), defined along an inner circumferential edge of the tire (100), with which the tire engages on a rim (not represented in Fig. 1) forming part of a vehicle wheel. The space defined by each carcass back-fold (101a) contains a bead filler (104) wherein the bead wires (102) are embedded. An antiabrasive strip (105) is usually placed in an axially external position relative to the carcass back-fold (101a).

A belt structure (106) is applied along the circumference of the carcass ply (101). In the particular embodiment in Fig. 1, the belt structure (106) comprises two belt strips (106a, 106b) which incorporate a plurality of reinforcing cords, typically metal cords, which are parallel to each other in each strip and intersecting with respect to the adjacent strip, oriented so as to form a predetermined angle relative to a circumferential direction. On the radially outermost belt strip (106b) may optionally be applied at least one zero-degree reinforcing layer (106c), commonly known as a "0° belt", which generally incorporates a plurality of reinforcing cords, typically textile cords, arranged at an angle of a few degrees relative to a circumferential direction, and coated and welded together by means of an elastomeric material.

A side wall (108) is also applied externally onto the carcass ply (101), this side wall extending, in an axially external position, from the bead (103) to the end of the belt structure (106).

A tread band (109), whose lateral edges are connected to the side walls (108), is applied circumferentially in a position radially external to the belt structure (106). Externally, the tread band (109), which may comprise the crosslinkable composition according to the present invention, has a rolling surface (109a) designed to come into contact with the ground. Circumferential grooves which are connected by transverse notches (not represented in Fig. 1) so as to define a plurality of blocks of various shapes and sizes distributed over the rolling surface (109a) are generally made in this surface (109a), which is represented for simplicity in Fig. 1 as being smooth.

A strip made of elastomeric material (110), commonly known as a "mini-side wall", may optionally be present in the connecting zone between the side walls (108) and the tread band (109), this mini-side wall generally being obtained by co-extrusion with the tread band and allowing an improvement in the mechanical interaction between the tread band (109) and the side walls (108). Alternatively, the end portion of the side wall (108) directly covers the lateral edge of the tread band (109).

A layer of elastomeric material (111) which serves as an "attachment sheet", i.e. a sheet capable of providing the connection between the tread band (109) and the belt structure (106), may be placed between the tread band (109) and the belt structure (106).

In the case of tubeless tires, a rubber layer (112) generally known as a "liner", which provides the necessary impermeability to the inflation air of the tire, may also be provided in a radially internal position relative to the carcass ply (101).

The process for producing the tire according to the present invention may be carried out according to techniques and using apparatus that are known in the art, as described, for example, in European Patent EP 199,064 and in Patents US 4,872,822, US 4,768,937, said process including at least one stage of manufacturing the green tire and at least one stage of vulcanizing this tire.

More particularly, the process for producing the tire comprises the stages of preparing, beforehand and separately from each other, a series of semi-finished products corresponding to the various structural elements of the tire (carcass plies, belt structure, bead wires, fillers, sidewalls and tread band) which are then combined together using a suitable manufacturing machine. Next, the subsequent vulcanization stage welds the above mentioned semi-finished products together to give a monolithic block, i.e. the finished tire.

The stage of preparing the above mentioned semi-finished products will be preceded by a stage of preparing and molding the various blends, of which said semi-finished products are made, according to conventional techniques.

The green tire thus obtained is then passed to the subsequent stages of molding and vulcanization. To this end, a vulcanization mold is used which is designed to receive the tire being processed inside a molding cavity having walls which are countermolded to define the outer surface of the tire when the vulcanization is complete.

Alternative processes for producing a tire or parts of a tire without using semi-finished products are disclosed, for example, in the above mentioned Patent Applications EP 928,680 and EP 928,702.

The green tire can be molded by introducing a pressurized fluid into the space defined by the inner surface of the tire, so as to press the outer surface of the green tire against the walls of the molding cavity. In one of the molding methods widely practiced, a vulcanization chamber made of elastomeric material, filled with steam and/or another fluid under pressure, is inflated inside the tire closed inside the molding cavity. In this way, the green tire is pushed against the inner walls of the molding cavity, thus obtaining the desired molding. Alternatively, the molding may be carried out without an inflatable vulcanization chamber, by providing inside the tire a toroidal metal support shaped according to the configuration of the inner surface of the tire to be obtained as described, for example, in European Patent EP 242,840. The difference in coefficient of thermal expansion between the toroidal metal support and the crude elastomeric material is exploited to achieve an adequate molding pressure.

At this point, the stage of vulcanizing the crude elastomeric material present in the tire is carried out. To this end, the outer wall of the vulcanization mold is placed in contact with a heating fluid (generally steam) such that the outer wall reaches a maximum temperature generally of between 100°C and 230°C. Simultaneously, the inner surface of the tire is heated to the vulcanization temperature using the same pressurized fluid used to press the tire against the walls of the molding cavity, heated to a maximum temperature of between 100°C and 250°C. The time required to obtain a satisfactory degree of vulcanization throughout the mass of the elastomeric material may vary in general between 3 min and 90 min and depends mainly on the dimensions of the tire. When the vulcanization is complete, the tire is removed from the vulcanization mold.

Although the present invention has been illustrated specifically in relation to a tire, other crosslinked elastomeric manufactured products that may be produced according to the invention may be, for example, belts such as, conveyor belts, power belts or driving belts; flooring and footpaths which may be used for recreational area, for industrial area, for sport or safety surfaces; flooring tiles; mats such as, anti-static computer mats, automotive floor mats; mounting pads; shock absorbers sheetings; sound barriers; membrane protections; shoe soles; carpet underlay; automotive bumpers; wheel arch liner; seals such as, automotive door or window seals; o-rings; gaskets; watering systems; pipes or hoses materials; flower pots; building blocks; roofing materials; geomembranes; and the like.

The present invention will be further illustrated below by means of a number of preparation examples, which are given for purely indicative purposes and without any limitation of this invention.

### EXAMPLES 1-2

### Surface treatment of the vulcanized rubber in a subdivided form

Mechanically ground waste rubber was treated according to the following procedure. Table 1 discloses the amount of the various component in parts by weight with respect to 100 parts by weight of ground waste rubber as such.

**TABLE 1**

| EXAMPLE | 1 | 2 |
|---|---|---|
| Vulcanized rubber | 100 | 100 |
| Dynasylan^{®} 6498 | 0.50 | - |
| TESPT | - | 0.50 |

| | | |
|---|---|---|
| Vulcanized rubber:mechanically ground waste rubber from scrap tires (<0.425 mm (40 mesh) - Somir); Dynasylan® 6498: oligomeric vinyltriethoxysilane (Degussa); TESPT: 3,3'-bis(triethoxysilylpropyl) tetrasulfide (X50S® comprising 50% carbon black and 50% silane, from Degussa). | | |

The mechanically ground waste rubber was charged into a laboratory turbo-mixer (BF srl Engineering) and was maintained under stirring. As soon as the temperature reached 80°C, the silane compound was added and the obtained mixture was stirred for 10 min. The obtained compound was cooled at 35°C and was discharged.

### EXAMPLES 3-6

### Preparation of the crosslinkable elastomeric compositions

The crosslinkable elastomeric compositions given in Table 2 were prepared as follows (the amounts of the various components are given in phr).

All the ingredients, except for the sulfur and the accelerators, were mixed together in an internal mixer (model Pomini PL 1.6) for about 5 min (1st Step). As soon as the temperature reached 145±5°C, the elastomeric composition was discharged. The sulfur and the accelerators were then added and mixing was carried out in an open roll mixer (2nd Step).

**TABLE 2**

| EXAMPLE | 3(*) | 4(*) | 5 | 6 |
|---|---|---|---|---|
| 1^{st} STEP | | | | |
| E-SBR 1712 | 80 | 80 | 80 | 80 |
| E-SBR 1500 | 20 | 20 | 20 | 20 |
| Silica | 20 | 20 | 20 | 20 |
| TESPT | 3.20 | 3.20 | 3.20 | 3.20 |
| Carbon Black | 45 | 45 | 45 | 45 |
| Vulcanized rubber⁽¹⁾ | - | 20 | - | - |
| Vulcanized rubber⁽²⁾ (Example 1) | - | - | 20 | - |
| Vulcanized rubber⁽³⁾ (Example 2) | | - | - | 20 |
| Stearic acid | 2 | 2 | 2 | 2 |
| Zinc oxide | 1 | 1 | 1 | 1 |
| Antioxidant | 3 | 3 | 3 | 3 |

| 2^{nd} STEP | | | | |
|---|---|---|---|---|
| CBS | 0.75 | 0.75 | 0.75 | 0.75 |
| MBTS | 2 | 2 | 2 | 2 |
| Sulfur | 1 | 1 | 1 | 1 |

| | | | | |
|---|---|---|---|---|
| (*): comparative. E-SBR 1712: styrene/butadiene copolymer, obtained by emulsion polymerization, containing 23.5% by weight of styrene, extended with 37.5 phr of oil (Europrene® 1712 - Polimeri Europa); E-SBR 1500: styrene/butadiene copolymer, obtained by emulsion polymerization, containing 23.5% by weight of styrene (Europrene® 1500- Polimeri Europa); Silica: precipitated silica (Zeosil® 1165 MP - Rhone-Poulenc); TESPT: 3,3'-bis(triethoxysilylpropyl) tetrasulfide (X50S® comprising 50% carbon black and 50% silane, from Degussa); Carbon Black: N375 (Vulcan® J - Cabot Corporation); Vulcanized rubber⁽¹⁾: mechanically ground waste rubber from scrap tires (<0.425 mm (40 mesh) - Somir); Vulcanized rubber⁽²⁾: surface treated ground waste rubber obtained in Example 1; Vulcanized rubber⁽³⁾: surface treated ground waste rubber obtained in Example 2; Antioxidant: N-1,3-dimethylbutyl-N'-p-phenylene-diamine (Vulkanox® 4020 - Bayer); CBS (accelerator):N-cyclohexyl-2-benzothiazyl-sulphenamide (Vulkacit® CZ - Bayer); MBTS (accelerator): dibenzothiazyl disulfide (Vulkacit® DM - Bayer). | | | | |

The Mooney viscosity ML(1+4) at 100°C was measured, according to Standard ISO 289-1:1994, on the non-crosslinked elastomeric compositions obtained as described above. The results are given in Table 3.

The above mentioned elastomeric compositions were subjected to MDR rheometric analysis using a Monsanto MDR rheometer, the tests being carried out at 170°C for 30 minutes at an oscillation frequency of 1.66 Hz (100 oscillations per minute) and an oscillation amplitude of +0.5°.

The static mechanical properties were measured on samples of the above mentioned elastomeric compositions vulcanized at 170°C for 10 min, according to Standard ISO 37:1994. The obtained results are given in Table 3.

Lastly the DIN abrasion values were measured according to Standard DIN 53516, also reported in Table 3, expressed as the amount of compound removed.

Table 3, also shows the percentage variation (D%) of the stress at break values and of the tensile modulus at 300% elongation (300% Modulus) values of the elastomeric composition of the present invention (Examples 5-6) and of the elastomeric composition wherein no-surface treated ground waste vulcanized rubber was added (Example 3) with respect to the elastomeric composition wherein no ground waste vulcanized rubber was added (Example 4).

**TABLE 3**

| EXAMPLE | 3 (*) | 4 (*) | 5 | 6 |
|---|---|---|---|---|
| Mooney viscosity ML(1+4) | 71.5 | 68.8 | 72.8 | 68.6 |

| MDR (30 min at 170°C) | | | | |
|---|---|---|---|---|
| MH (min) | 53.0 | 38.47 | 44.73 | 45.67 |
| T90 (min) | 5.13 | 6.41 | 5.55 | 5.29 |

| MECHANICAL PROPERTIES | | | | |
|---|---|---|---|---|
| Stress at break (MPa) | 18 | 14.65 | 15.86 | 16.13 |
| Stress at break (D%) | - | -19 | -12 | -10 |
| 100% Modulus (MPa) | 2.71 | 1.87 | 2.21 | 2.17 |
| 200% Modulus (MPa) | 7.00 | 4.38 | 5.28 | 5.28 |
| 300% Modulus (MPa) | 11.7 | 8.24 | 9.75 | 9.96 |
| 300% Modulus (D%) | - | -30 | -17 | -15 |
| Elongation at break (%) | 480 | 486 | 465 | 453 |
| DIN abrasion (mm³) | 84.5 | 101.7 | 93.1 | 86.5 |

| | | | | |
|---|---|---|---|---|
| (*): comparative. | | | | |

### EXAMPLES 7-8

### Surface treatment of the vulcanized rubber in a subdivided form

Mechanically ground waste rubber was treated according to the procedure disclosed in Examples 1-2. Table 4 discloses the amount of the various component in parts by weight with respect to 100 parts by weight of ground waste rubber as such.

**TABLE 4**

| EXAMPLE | 7 | 8 |
|---|---|---|
| Vulcanized rubber | 100 | 100 |
| TESPT | 1.00 | 5.00 |

| | | |
|---|---|---|
| Vulcanized rubber:mechanically ground waste rubber from scrap tires (<0.425 mm (40 mesh) - Somir); TESPT: 3,3' bis(triethoxysilylpropyl) tetrasulfide (X50S® comprising 50% carbon black and 50% silane, from Degussa). | | |

### EXAMPLES 9-12

### Preparation of the crosslinkable elastomeric compositions

The crosslinkable elastomeric compositions given in Table 5 were prepared as disclosed in Examples 3-6 (the amounts of the various components are given in phr).

**TABLE 5**

| EXAMPLE | 9(*) | 10(*) | 11 | 12 |
|---|---|---|---|---|
| 1^{st} STEP | | | | |
| NR | 80 | 80 | 80 | 80 |
| BR | 20 | 20 | 20 | 20 |
| Carbon Black | 60 | 60 | 60 | 60 |
| Vulcanized rubber⁽¹⁾ | - | 18 | - | - |
| Vulcanized rubber⁽²⁾ (Example 7) | - | - | 18 | - |
| Vulcanized rubber⁽³⁾ (Example 8) | - | - | - | 18 |
| TESPT | - | - | - | - |
| Aromatic oil | 10 | 10 | 10 | 10 |
| Stearic acid | 1.50 | 1.50 | 1.50 | 1.50 |
| Zinc oxide | 3.50 | 3.50 | 3.50 | 3.50 |
| Antioxidant | 1 | 1 | 1 | 1 |

| 2^{nd} STEP | | | | |
|---|---|---|---|---|
| TBBS | 0.70 | 0.70 | 0.70 | 0.70 |
| Sulfur | 2.40 | 2.40 | 2.40 | 2.40 |

| | | | | |
|---|---|---|---|---|
| (*): comparative. NR: natural rubber; BR: cis-1,4-polybutadiene (Europrene® BR 40 - EniChem Elastomeri); Carbon Black: N375 (Vulcan® J - Cabot Corporation); Vulcanized rubber⁽¹⁾: mechanically ground waste rubber from scrap tires (<0.425 mm (40 mesh) - Somir); Vulcanized rubber⁽²⁾: surface treated ground waste rubber obtained in Example 7; Vulcanized rubber⁽³⁾: surface treated ground waste rubber obtained in Example 8; TESPT: 3,3'-bis(triethoxysilylpropyl) tetrasulfide (X50S® comprising 50% carbon black and 50% silane, from Degussa - the amount reported is relative to the amount of silane); Antioxidant: 2,2,4-trimethyl-1,2-dihydroquinoline, polymerized (Vulkanox® HS - Bayer); TBBS (accelerator): N-t-Butyl-2-benzothiazil-sulphenamide (Vulkacit® NZ from Bayer). | | | | |

The Mooney viscosity ML(1+4) at 100°C was measured, according to Standard ISO 289-1:1994, on the non-crosslinked elastomeric compositions obtained as described above. The results are given in Table 6.

The above mentioned elastomeric compositions were subjected to MDR rheometric analysis using a Monsanto MDR rheometer, the tests being carried out at 170°C for 30 minutes at an oscillation frequency of 1.66 Hz (100 oscillations per minute) and an oscillation amplitude of ±0.5°.

The static mechanical properties were measured on samples of the above mentioned elastomeric compositions vulcanized at 170°C for 10 min, according to Standard ISO 37:1994. The obtained results are given in Table 6.

Table 6, also shows the percentage variation (D%) of the stress at break values and of the tensile modulus at 300% elongation (300% Modulus) values of the elastomeric composition of the present invention (Examples 11-12) and of the elastomeric composition wherein no-surface treated ground waste vulcanized rubber was added (Example 10 and Example 13) with respect to the elastomeric composition wherein no ground waste vulcanized rubber was added (Example 9).

**TABLE 6**

| EXAMPLE | 9 (*) | 10 (*) | 11 | 12 |
|---|---|---|---|---|
| Mooney viscosity ML(1+4) | 75.5 | 83.8 | 78.2 | 78.4 |

| MDR (30 min at 170°C) | | | | |
|---|---|---|---|---|
| MH(min) | 59.54 | 55.26 | 54.53 | 5.52 |
| T90 (min) | 4.33 | 4.43 | 4.38 | 4.28 |

| MECHANICAL PROPERTIES | | | | |
|---|---|---|---|---|
| Stress at break (MPa) | 10.40 | 6.90 | 9.18 | 9.87 |
| Stress at break (D%) | - | -33.65 | -11.70 | -5.0 |
| 300% Modulus (MPa) | 7.32 | 5.67 | 6.82 | 7.99 |
| 300% Modulus (D%) | - | -22.50 | -6.8 | -9.15 |
| Elongation at break (%) | 377 | 347 | 365 | 344 |

| | | | | |
|---|---|---|---|---|
| (*): comparative. | | | | |

## Claims

1. Crosslinkable elastomeric composition comprising:
- at least one vulcanized rubber in a subdivided form;
- at least one diene elastomeric polymer; and
- at least one sulfur-based vulcanizing agent;
**characterized in that** said vulcanized rubber in a subdivided form is surface treated with at least one silane coupling agent.

2. Crosslinkable elastomeric composition according to claim 1, wherein the vulcanized rubber in a subdivided form has a particle size not higher than 5 mm.

3. Crosslinkable elastomeric composition according to claim 1, wherein the vulcanized rubber in a subdivided form has a particle size not higher than 1 mm.

4. Crosslinkable elastomeric composition according to claim 3, wherein the vulcanize rubber in a subdivided form has a particle size not higher than 0.5 mm.

5. Crosslinkable elastomeric composition according to any one of the preceding claims, wherein the vulcanized rubber in a subdivided form is present in an amount of from 2 phr to 90 phr.

6. Crosslinkable elastomeric composition according to claim 5, wherein the vulcanized rubber in a subdivided form is present in an amount of from 5 phr to 30 phr.

7. Crosslinkable elastomeric composition according to any one of the preceding claims, wherein the vulcanized rubber in a subdivided form comprises at least one crosslinked diene elastomeric polymer or copolymer selected from: cis-1,4-polyisoprene, 3,4-polyisoprene, polybutadiene, optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

8. Crosslinkable elastomeric composition according to any one of the preceding claims, wherein the vulcanized rubber in a subdivided form comprises at least one crosslinked elastomeric polymer of one or more monoolefins with an olefinic comonomer or derivatives thereof.

9. Crosslinkable elastomeric composition according to claim 8, wherein the crosslinked elastomeric polymer is selected from: ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

10. Crosslinkable elastomeric composition according to any one of the preceding claims, wherein the diene elastomeric polymer is selected from: cis-1,4-polyisoprene, 3,4-polyisoprene, polybutadiene, optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

11. Crosslinkable composition according to any one of the preceding claims, wherein the elastomeric composition comprises at least one elastomeric polymer of one or more monoolefins with an olefinic comonomer or derivatives thereof.

12. Crosslinkable elastomeric composition according to claim 11, wherein the elastomeric polymer is selected from: ethylene/propylene copolymers (EPR) or ethylene/propylene/diene copolymers (EPDM); polyisobutene; butyl rubbers; halobutyl rubbers; or mixtures thereof.

13. Crosslinkable elastomeric composition according to any one of the preceding claims, wherein the silane coupling agent is selected from sulfide silane compounds having the following formula (I):
Z-Alk-Sₙ-Alk-Z (I)
wherein Z is selected from the following groups: -Si(R₁)₂(R₂), -Si(R₁)(R₂)₂ and -Si(R₂)₃, in which R₁ is a C₁-C₄ alkyl group, a cyclohexyl group or a phenyl group and R₂ is a C₁-C₁₈ alkoxy group or a C₅-C₈ cycloalkoxy group; Alk is a divalent hydrocarbon containing from 1 to 18 carbon atoms and n is a number from 2 to 8.

14. Crosslinkable elastomeric composition according to any one of claims 1 to 12, wherein the silane coupling agent is selected from aminosilane compounds having the following formula (11): 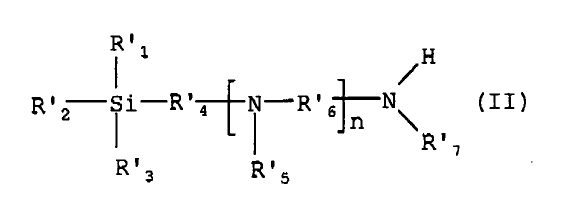 wherein:
- R'₁, R'₂ and R'₃, which may be identical or different, are selected from hydrogen, C₁-C₈ alkoxy groups, C₁-C₁₈ alkyl groups, C₆-C₂₀ aryl groups, C₇-C₃₀ alkylaryl or arylalkyl groups, on condition that at least one of the groups R'₁, R'₂ and R'₃ represents an alkoxy group;
- R'₄ is selected from C₁-C₈ alkylene groups, C₆-C₂₀ arylene groups, said arylene groups optionally being substituted with C₁-C₈ alkyl groups;
- R'₅ and R'₇, which may be identical or different, are selected from hydrogen, C₁-C₁₈ alkyl groups; or, when R'₅ and R'₇ are other than hydrogen, they may form, together with the nitrogen atoms to which they are attached, 5- or 6-membered heterocyclic rings;
- R'₆ is selected from C₁-C₁₈ alkylene groups, C₆-C₁₄ arylene groups, arylene groups optionally substituted with C₁-C₁₈ alkyl groups, C₇-C₃₀ alkylenearylene or arylenealkylene groups, C₃-C₃₀ cycloalkylene groups, said cycloalkylene groups optionally being substituted with C₁-C₁₈ alkyl groups;
- n is a integer from 0 to 5 inclusive.

15. Crosslinkable elastomeric composition according to any one of claims 1 to 12, wherein the silane coupling agent is selected from vinylsilane compounds having the following formula (III):
RSiR'ₙY₃₋ₙ (III)
wherein:
- R represents an alkenyl group or an alkenyloxy group;
- R' represents an hydrogen atom or an alkyl group;
- Y represents a hydrolizable organic group; and
- n is 0, 1 or 2.

16. Crosslinkable elastomeric composition according to any one of claims 1 to 12, wherein the silane coupling agent is selected from mercaptosilane compounds having the following formula (IV): 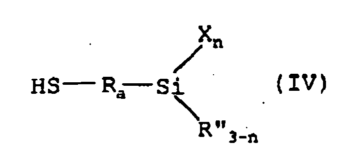 wherein:
- X represents an halogen atom selected from chlorine, bromine, iodine, fluorine, a C₁-C₈ alkoxy group;
- Rₐ represents a C₁-C₁₀ alkylene group;
- R" represents a C₁-C₃₀ alkyl group, a C₇-C₃₀ alkylaryl or arylalkyl group, a C₅-C₃₀ cycloaliphatic group, a C₆-C₂₀ aromatic group;
- n is an integer from 1 to 3 inclusive.

17. Crosslinkable elastomeric composition according to any one of claims 1 to 12, wherein the silane coupling agent is selected from epoxysilane compounds such as 3-glycidyloxypropyltrimethoxy-silane, 3-glycidyloxypropylmethyldimethoxysilane, 2-(3,4 epoxycyclohexyl)ethyltrimethoxysilane, or mixture thereof.

18. Crosslinkable elastomeric composition according to any one of the preceding claims, wherein the vulcanized rubber in a subdivided form is surface treated with an amount of at least one silane coupling agent of from 0.1% by weight to 5% by weight, said amount being expressed with respect to the total weight of the vulcanized rubber in a subdivided form + the silane coupling agent.

19. Crosslinkable elastomeric composition according to claim 18, wherein the vulcanized rubber in a subdivided form is surface treated with an amount of at least one silane coupling agent of from 0.2% by weight to 3% by weight, said amount being expressed with respect to the total weight of the vulcanized rubber in a subdivided form + the silane coupling agent.

20. Crosslinkable composition according to any one of the preceding claims, wherein the sulfur-based vulcanizing agent is selected from:
- soluble sulfur (crystalline sulfur);
- insoluble sulfur (polymeric sulfur);
- sulfur dispersed in oil;
- sulfur donors such as, tetramethylthiuram disulfide (TMTD), tetrabenzylthiuram disulfide (TBzTD), tetraethylthiuram disulfide (TETD); tetrabutylthiuram disulfide (TBTD), dimethyldiphenylthiuram disulfide (MPTD), pentamethylenethiuram tetrasulfide or hexasulfide (DPTT), morpholinobenzothiazole disulfide (MBSS), N-oxydiethylenedithiocarbamyl-N'-oxydiethylene-sulphenamide (OTOS), dithiodimorpholine (DTM or DTDM), caprolactam disulfide (CLD).

21. Crosslinkable composition according to claim 20, wherein said sulfur-based vulcanizing agent is present in an amount of from 0.5 phr to 5 phr.

22. Crosslinkable elastomeric composition according to any one of the preceding claims, wherein at least one reinforcing filler is present, in an amount of from 0.1 phr to 120 phr.

23. Crosslinkable elastomeric composition according to claim 22, wherein the reinforcing filler is carbon black.

24. Crosslinkable elastomeric composition according to claim 22, wherein the reinforcing filler is silica.

25. Crosslinkable elastomeric composition according to claim 24, wherein a silica coupling agent is present.

26. Crosslinkable composition according to claim 24, wherein the vulcanized rubber in subdivided form is surface pre-treated with at least one silane coupling agent.

27. Tire for vehicle wheels, comprising at least one structural element obtained by crosslinking a crosslinkable elastomeric composition comprising:
- at least one vulcanized rubber in a subdivided form;
- at least one diene elastomeric polymer; and
- at least one sulfur-based vulcanizing agent;
**characterized in that** said vulcanized rubber in a subdivided form is surface treated with at least one silane coupling agent.

28. Tire for vehicle wheels according to claim 27, comprising:
- a carcass structure shaped in a substantially toroidal configuration, the opposite lateral edges of which are associated with respective right-hand and left-hand bead wires to form respective beads;
- a belt structure applied in a radially external position with respect to said carcass structure;
- a tread band radially superimposed on said belt structure;
- a pair of sidewalls applied laterally on opposite sides with respect to said carcass structure;
wherein said structural element obtained by crosslinking a crosslinkable elastomeric composition comprising:
- at least one vulcanized rubber in a subdivided form surface treated with at least one silane coupling agent;
- at least one diene elastomeric polymer;
- at least one sulfur-based vulcanizing agent;
is the tread band.

29. Tire for vehicle wheels according to claim 27 or 28, wherein the vulcanized rubber in a subdivided form is defined according to any one of claims 2 to 9.

30. Tire for vehicle wheels according to any one of claims 27 to 29, wherein the diene elastomeric polymer is defined according to any one of claims 10 to 12.

31. Tire for vehicle wheels according to any one of claims 27 to 30, wherein the silane coupling agent is defined according to any one of claims 13 to 19.

32. Tire for vehicle wheels according to any one of claims 27 to 31, wherein the sulfur-based vulcanizing agent is defined according to claim 20 or 21.

33. Tire according to any one of claims 27 to 32, wherein at least one reinforcing filler is present in the crosslinkable elastomeric composition as defined according to any one of claims 22 to 26.

34. Crosslinked manufactured product obtained by crosslinking a crosslinkable elastomeric composition as defined according to any one of claims 1 to 26.

35. Process for producing a crosslinkable elastomeric composition comprising the following steps:
(a) surface treating at least one vulcanized rubber in a subdivided form with at least one silane coupling agent;
(b) mixing the surface treated vulcanized rubber in a subdivided form obtained in step (a) with at least one diene elastomeric polymer;
(c) adding to the elastomeric composition obtained in step (b) at least one sulfur-based vulcanizing agent.

36. Process according to claim 35, wherein step (a) is carried out at a temperature of from 50°C to 150°C.

37. Process according to claim 35 or 36, wherein step (a) is carried out, for a time of from 5 min to 30 min.

38. Process according to claim 35, wherein said vulcanized rubber in a subdivided form is heated at a temperature of from 50°C to 150°C, before the addition of the silane coupling agent.

39. Process according to any one of claims 35 to 38, wherein step (b) is carried out at a temperature of from 100°C to 180°C.

40. Process according to any one of claims 35 to 39, wherein step (b) is carried out for a time of from 2 min and 30 min.

41. Process according to any one of claims 35 to 40, wherein step (c) is carried out at a temperature of from 80°C to 120°C.

42. Process according to any one of claims 35 to 41, wherein step (c) is carried out for a time of from 2 min to 30 min.

43. Process according to any one of claims 35 to 42, wherein the vulcanized rubber in a subdivided form is defined according to any one of claims 2 to 9.

44. Process according to any one of claims 35 to 43, wherein the diene elastomeric polymer is defined according to any one of claims 10 to 12.

45. Process according to any one of claims 35 to 44, wherein the silane coupling agent is defined according to any one of claims 13 to 19.

46. Process according to any one of claims 35 to 45, wherein the sulfur-based vulcanizing agent is defined according to claim 20 or 21.

## Patentansprüche

1. Vernetzbares Elastomergemisch, umfassend:
- wenigstens einen vulkanisierten Kautschuk in vermahlener Form,
- wenigstens ein Dienelastomerpolymer und
- wenigstens ein Vulkanisationsmittel auf Schwefelbasis,
**dadurch gekennzeichnet, daß** der vulkanisierte Kautschuk in vermahlener Form mit wenigstens einem Silankupplungsmittel oberflächenbehandelt ist.

2. Vernetzbares Elastomergemisch nach Anspruch 1, bei dem der vulkanisierte Kautschuk in vermahlener Form eine Teilchengröße von höchstens 5 mm aufweist.

3. Vernetzbares Elastomergemisch nach Anspruch 1, bei dem der vulkanisierte Kautschuk in vermahlener Form eine Teilchengröße von höchstens 1 mm aufweist.

4. Vernetzbares Elastomergemisch nach Anspruch 3, bei dem der vulkanisierte Kautschuk in vermahlener Form eine Teilchengröße von höchstens 0,5 mm aufweist.

5. Vernetzbares Elastomergemisch nach einem der vorhergehenden Ansprüche, bei dem der vulkanisierte Kautschuk in vermahlener Form in einer Menge von 2 phr bis 90 phr vorliegt.

6. Vernetzbares Elastomergemisch nach Anspruch 5, bei dem der vulkanisierte Kautschuk in vermahlener Form in einer Menge von 5 phr bis 30 phr vorliegt.

7. Vernetzbares Elastomergemisch nach einem der vorhergehenden Ansprüche, bei dem der vulkanisierte Kautschuk in vermahlener Form wenigstens ein vernetztes Dienelastomerpolymer oder -copolymer umfaßt, ausgewählt unter cis-1,4-Polyisopren, 3,4-Polyisopren, Polybutadien, gegebenenfalls halogeniertem Isopren/Isobuten-, 1,3-Butadien/Acrylnitril-, Stryrol/1,3-Butadien-, Styrol/Isopren/1,3-Butadien-und Styrol/1,3-Butadien/Acrylnitril-Copolymeren oder Gemischen davon.

8. Vernetzbares Elastomergemisch nach einem der vorhergehenden Ansprüche, bei dem der vulkanisierte Kautschuk in vermahlener Form wenigstens ein vernetztes Elastomerpolymer aus einem oder mehreren Monoolefinen mit einem Olefincomonomer oder Derivaten davon umfaßt.

9. Vernetzbares Elastomergemisch nach Anspruch 8, bei dem das vernetzte Elastomerpolymer ausgewählt ist unter Ethylen/Propylen-Copolymeren (EPR) oder Ethylen/Propylen/Dien-Copolymeren (EPDM), Polyisobuten, Butylkautschuken, Halobutylkautschuken, insbesondere Chlorbutyl- oder Brombutylkautschuken oder Gemischen davon.

10. Vernetzbares Elastomergemisch nach einem der vorhergehenden Ansprüche, bei dem das Dienelastomerpolymer ausgewählt ist unter cis-1,4-Polyisopren, 3,4-Polyisopren, Polybutadien, gegebenenfalls halogeniertem Isopren/Isobuten-, 1,3-Butadien/Acrylnitril-, Strytol/1,3-Butadien-, Styrol/Isopren/1,3-Butadien- und Styrol/1,3-Butadien/Acrylnitril-Copolymeren oder Gemischen davon.

11. Vernetzbares Elastomergemisch nach einem der vorhergehenden Ansprüche, bei dem das Elastomergemisch wenigstens ein Elastomerpolymer aus einem oder mehreren Monoolefinen mit einem Olefincomonomer oder Derivaten davon umfaßt.

12. Vernetzbares Elastomergemisch nach Anspruch 11, bei dem das Elastomerpolymer ausgewählt ist unter Ethylen/Propylen-Copolymeren (EPR) oder Ethylen/Propylen/Dien-Copolymeren (EPDM), Polyisobuten, Butylkautschuken, Halobutylkautschuken oder Gemischen davon.

13. Vernetzbares Elastomergemisch nach einem der vorhergehenden Ansprüche, bei dem das Silankupplungsmittel ausgewählt ist unter Sulfidsilanverbindungen der Formel I
Z-Alk-Sₙ-Alk-Z (I)
worin Z ausgewählt ist unter den Gruppen -Si(R₁)₂(R₂), -Si(R₁)(R₂)₂ und -Si(R₂)₃, worin R₁ eine C₁₋₄-Alkylgruppe, eine Cyclohexylgruppe oder eine Phenylgruppe und R₂ eine C₁₋₁₈-Alkoxygruppe oder eine C₅₋₈-Cycloalkoxygruppe, Alk einen zweiwertigen Kohlenwasserstoff mit 1 bis 18 C-Atomen und n eine Zahl von 2 bis 8 bedeuten.

14. Vernetzbares Elastomergemisch nach einem der Ansprüche 1 bis 12, worin das Silankupplungsmittel ausgewählt ist unter Aminosilanverbindungen der Formel II 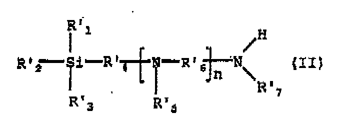 worin
- R'₁, R'₂ und R'₃, die gleich oder verschieden sein können, ausgewählt sind unter Wasserstoff, C₁₋₈-Alkoxy-, C₁₋₁₈-Alkyl-, C₆₋₂₀-Aryl-, C₇₋₃₀-Alkylaryl oder Arylalkylgruppen, mit der Maßgabe, daß wenigstens eine der Gruppen R'₁, R'₂ und R'₃ eine Alkoxygruppe darstellt,
- R'₄ ausgewählt ist unter C₁₋₈-Alkylen- und C₆₋₂₀-Arylengruppen, wobei die Arylengruppen gegebenenfalls durch C₁₋₈-Alkylgruppen substituiert sind,
- R'₅ und R'₇, die gleich oder verschieden sein können, ausgewählt sind unter C₁₋₁₈-Alkylgruppen, oder wenn R'₅ und R'₇ eine andere Bedeutung als Wasserstoff haben, sie zusammen mit den Stickstoffatomen, mit denen sie verknüpft sind, 5- oder 6-gliedrige heterocyclische Ringe bilden können,
- R'₆ ausgewählt ist unter C₁₋₁₈-Alkylengruppen, C₆₋₁₄-Arylengruppen, gegebenenfalls durch C₁₋₁₈Alkylgruppen substituierte Arylengruppen, C₇₋₃₀-Alkylenarylen- oder Arylenalkylengruppen, C₃₋₃₀-Cycloalkylengruppen, die gegebenenfalls durch C₁₋₁₈-Alkylgruppen substituiert sind, und
- n eine ganze Zahl von 0 bis einschließlich 5 bedeutet.

15. Vernetzbares Elastomergemisch nach einem der Ansprüche 1 bis 12, bei dem das Silankupplungsmittel ausgewählt ist unter Vinylsilanverbindungen der Formel III
RSiR'ₙY₃₋ₙ (III)
worin
- R eine Alkenyl- oder eine Alkenyloxygruppe,
- R' ein Wassserstoffoder eine Alkylgruppe und
- Y eine hydrolisierbare organische Gruppe darstellen und
- n 0, 1 oder 2 bedeutet.

16. Vernetzbares Elastomergemisch nach einem der Ansprüche 1 bis 12, bei dem das Silankupplungsmittel ausgewählt ist unter Mercaptosilanverbindungen der Formel IV 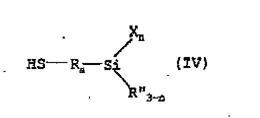 worin
- X ein Halogenatom, ausgewählt unter Chlor, Brom, Iod oder Fluor, und eine C₁₋₈-Alkoxygruppe,
- Rₐ eine C₁₋₁₀-Alkylengruppe,
- R" eine C₁₋₃₀-Alkyl-, C₇₋₃₀-Alkylaryl oder -Arylalkylgruppe, eine cycloaliphatische C₅₋₃₀-Gruppe oder eine aromatische C₆₋₂₀-Gruppe darstellen, und
- n eine ganze Zahl von 1 bis einschließlich 3 bedeutet.

17. Vernetzbares Elastomergemisch nach einem der Ansprüche 1 bis 12, bei dem das Silankupplungsmittel ausgewählt ist unter Epoxysilanverbindungen wie 3-Glycidyloxypropyltrimethoxy-, 3-Glycidyloxypropylmethyldimethoxy- oder 2-(3,4-Epoxycyclohexyl)ethyltrimethoxysilan oder einem Gemisch davon.

18. Vernetzbares Elastomergemisch nach einem der vorhergehenden Ansprüche, bei dem der vulkanisierte Kautschuk in vermahlener Form mit einer Menge von wenigstens einem Silankupplungsmittel von 0,1 Gew.-% bis 5 Gew.-% oberflächenbehandelt ist, wobei die Menge auf das Gesamtgewicht von vulkanisiertem Kautschuk in vermahlener Form plus Silankupplungsmittel bezogen ist.

19. Vernetzbares Elastomergemisch nach Anspruch 18, bei dem der vulkanisierte Kautschuk in vermahlener Form mit einer Menge von wenigstens einem Silankupplungsmittel von 0,2 Gew.-% bis 3 Gew.-% oberflächenbehandelt ist, wobei die Menge auf das Gesamtgewicht von vulkanisiertem Kautschuk in vermahlener Form plus Silankupplungsmittel bezogen ist.

20. Vernetzbares Gemisch nach einem der vorhergehenden Ansprüche, bei dem das Vulkanisationsmittel auf Schwefelbasis ausgewählt ist unter
- löslichem Schwefel (kristallinem Schwefel),
- unlöslichem Schwefel (polymerem Schwefel),
- in Öl dispergiertem Schwefel und
- Schwefellieferanten wie Tetramethylthiuramdisulfid (TMTD), Tetrabenzylthiuramdisulfid (TBzTD), Tetraethylthiuramdisulfid (TETD), Tetrabutylthiuramdisulfid (TBTD), Dimethyldiphenylthiuramdisulfid (MPTD), Pentamethylenthiuramtetrasulfid oderhexasulfid (DPTT), Morpholinbenzthiazoldisulfid (MBSS), N-Oxydiethylendithiocarbamyl-N'-oxydiethylen-sulfenamid (OTOS), Dithiodimorpholin (DTM oder DTDM) und Caprolactamdisulfid (CLD).

21. Vernetzbares Gemisch nach Anspruch 20, bei dem das Vulkanisationsmittel auf Schwefelbasis in einer Menge von 0,5 phr bis 5 phr vorliegt.

22. Vernetzbares Elastomergemisclt nach einem der vorhergehenden Ansprüche, bei dem wenigstens ein Verstärkungsfüller in einer Menge von 0,1 phr bis 120 phr vorliegt.

23. Vernetzbares Elastomergemisch nach Anspruch 22, bei dem der Verstärkungsfüller Ruß ist.

24. Vernetzbares Elastomergemisch nach Anspruch 22, bei dem der Verstärkungsfüller Kieselerde ist.

25. Vernetzbares Elastomergemisch nach Anspruch 24, bei dem ein Kieselerdekupplungsmittel vorliegt.

26. Vernetzbares Elastomergemisch nach Anspruch 24, bei dem der vulkanisierte Kautschuk in vermahlener Form mit wenigstens einem Silankupplungsmittel oberflächenvorbehandelt ist.

27. Reifen für Kraftfahrzeugräder, der wenigstens ein Bauteil umfaßt, erhalten durch Vernetzung eines vernetzbaren Elastomergemisches, umfassend:
- wenigstens einen vulkanisierten Kautschuk in vermahlener Form,
- wenigstens ein Dienelastomerpolymer und
- wenigstens ein Vulkanisationsmittel auf Schwefelbasis,
**dadurch gekennzeichnet, daß** der vulkanisierte Kautschuk in vermahlener Form mit wenigstens einem Silankupplungsmittel oberflächenbehandelt ist.

28. Reifen für Kraftfahrzeugräder nach Anspruch 27, umfassend
- einen Karkassenaufbau von im Wesentlichen ringförmiger Konfiguration, dessen gegenüberliegende seitlichen Kanten mit den entsprechenden rechten und linken Wulstdrähten unter Bildung der entsprechenden Wülste verbunden sind,
- einen Gürtelaufbau, der im Hinblick auf den Karkassenaufbau in radial äußerer Position aufgebracht ist,
- eine radial auf den Gürtelbau aufgebrachtes Laufflächenband und
- ein Paar von Seitenwänden, die lateral auf die gegenüberliegenden Seiten in Bezug auf den Karkassenaufbau aufgebracht sind,
wobei das Bauteil, erhalten durch Vernetzung eines vernetzbaren Elastomergemisches, umfassend:
- wenigstens einen mit wenigstens einem Silankupplungsmittel oberflächenbehandelten vulkanisierten Kautschuk in vermahlener Form,
- wenigstens ein Dienelastomerpolymer und
- wenigstens ein Vulkanisationsmittel auf Schwefelbasis,
das Laufflächenrand ist.

29. Reifen für Kraftfahrzeugräder nach Anspruch 27 oder 28, wobei der vulkanisierte Kautschuk in vermahlener Form wie in einem der Ansprüche 2 bis 9 definiert ist.

30. Reifen für Kraftfahrzeugräder nach einem der Ansprüche 27 bis 29, wobei das Dienelastomerpolymer wie in einem der Ansprüche 10 bis 12 definiert ist.

31. Reifen für Kraftfahrzeugräder nach einem der Ansprüche 27 bis 30, wobei das Silankupplungsmittel wie in einem der Ansprüche 13 bis 19 definiert ist.

32. Reifen für Kraftfahrzeugräder nach einem der Ansprüche 27 bis 31, wobei das Vulkanisationsmittel auf Schwefelbasis wie in einem der Ansprüche 20 oder 21 definiert ist.

33. Reifen nach einem der Ansprüche 27 bis 32, wobei wenigstens ein Verstärkungsfüller im vernetzbaren Elastomergemisch, definiert wie in einem der Ansprüche 20 bis 26, vorliegt.

34. Vernetztes Produkt, erhalten durch Vernetzung eines vernetzbaren Elastomergemisches, definiert nach einem der Ansprüche 1 bis 26.

35. Verfahren zur Herstellung eines vernetzbaren Elastomergemisches, umfassend die folgenden Stufen:
(a) Oberflächenbehandlung wenigstens eines vulkanisierten Kautschuk in gemahlener Form mit wenigstens einem Silankupplungsmittel,
(b) Mischen des oberflächenbehandelten vulkanisierten Kautschuks in unterteilter Form, erhalten auf Stufe (a), mit wenigstens einem Dienelastomerpolymer,
(c) Zugabe wenigstens eines Vulkanisationsmittels auf Schwafelbasis zum auf Stufe (b) erhaltenen Elastomergemisch.

36. Verfahren nach Anspruch 35, bei dem die Stufe (a) bei einer Temperatur von 50° C bis 150° C durchgeführt wird.

37. Verfahren nach Anspruch 35 oder 36, bei dem die Stufe (a) während einer Zeitdauer von 5 Minuten bis 30 Minuten durchgeführt wird.

38. Verfahren nach Anspruch 35, bei dem der vulkanisierte Kautschuk in unterteilter Form vor der Zugabe des Silankupplungsmittels bei einer Temperatur von 50° C bis 150° C erwärmt wird.

39. Verfahren nach Anspruch 35 bis 38, bei dem die Stufe (b) bei einer Temperatur von 100° C bis 180° C durchgeführt wird.

40. Verfahren nach einem der Ansprüche 35 bis 39, bei dem die Stufe (b) während einer Zeitdauer von 2 Minuten bis 30 Minuten durchgeführt wird.

41. Verfahren nach einem der Ansprüche 35 bis 40, bei dem die Stufe (c) bei einer Temperatur von 80° C bis 120° C durchgeführt wird.

42. Verfahren nach einem der Ansprüche 35 bis 41, bei dem die Stufe (c) während einer Zeitdauer von 2 Minuten bis 30 Minuten durchgeführt wird.

43. Verfahren nach einem der Ansprüche 35 bis 42, wobei der vulkanisierte Kautschuk in unterteilter Form wie in einem der Ansprüche 2 bis 9 definiert ist.

44. Verfahren nach einem der Ansprüche 35 bis 43, wobei das Dienelastomerpolymer wie in einem der Ansprüche 10 bis 12 definiert ist.

45. Verfahren nach einem der Ansprüche 35 bis 44, wobei das Silankupplungsmittel wie in einem der Ansprüche 13 bis 19 definiert ist.

46. Verfahren nach einem der Ansprüche 35 bis 45, wobei das Vulkanisationsmittel auf Schwefelbasis wie in einem der Ansprüche 20 oder 21 definiert ist.

## Revendications

1. Composition élastomère réticulable comprenant :
- au moins un caoutchouc vulcanisé sous forme divisée,
- au moins un élastomère de type polymère de diène,
- et au moins un agent de vulcanisation à base de soufre,
**caractérisé en ce que** ledit caoutchouc vulcanisé sous forme divisée a subi un traitement de surface avec au moins un agent de couplage de type silane.

2. Composition élastomère réticulable conforme à la revendication 1, dans laquelle la taille des particules du caoutchouc vulcanisé sous forme divisée vaut au plus 5 mm.

3. Composition élastomère réticulable conforme à la revendication 1, dans laquelle la taille des particules du caoutchouc vulcanisé sous forme divisée vaut au plus 1 mm.

4. Composition élastomère réticulable conforme à la revendication 3, dans laquelle la taille des particules du caoutchouc vulcanisé sous forme divisée vaut au plus 0,5 mm.

5. Composition élastomère réticulable conforme à l'une des revendications précédentes, dans laquelle le caoutchouc vulcanisé sous forme divisée se trouve en une proportion de 2 à 90 pcpr (parties pour cent parties de résine).

6. Composition élastomère réticulable conforme à la revendication 5, dans laquelle le caoutchouc vulcanisé sous forme divisée se trouve en une proportion de 5 à 30 pcpr.

7. Composition élastomère réticulable conforme à l'une des revendications précédentes, dans laquelle le caoutchouc vulcanisé sous forme divisée comprend au moins un élastomère polymère ou copolymère de diène réticulé, choisi parmi les suivants : cis-1,4-polyisoprène, 3,4-polyisoprène, polybutadiène, copolymères d'isoprène et d'isobutène éventuellement halogénés, copolymères de 1,3-butadiène et d'acrylonitrile, copolymères de styrène et de 1,3-butadiène, copolymères de styrène, d'isoprène et de 1,3-butadiène, et copolymères de styrène, de 1,3-butadiène et d'acrylonitrile, ainsi que leurs mélanges.

8. Composition élastomère réticulable conforme à l'une des revendications précédentes, dans laquelle le caoutchouc vulcanisé sous forme divisée comprend au moins un polymère élastomère réticulé formé à partir d'une ou de plusieurs monooléfine(s) et d'un comonomère oléfinique ou l'un de ses dérivés.

9. Composition élastomère réticulable conforme à la revendication 8, pour laquelle le polymère élastomère réticulé est choisi parmi les suivants : copolymères d'éthylène et de propylène (EPR), copolymères d'éthylène, de propylène et de diène (EPDM), polyisobutène, caoutchoucs butyl et caoutchoucs butyl halogénés, en particulier caoutchoucs butyl chlorés ou bromés, ainsi que leurs mélanges.

10. Composition élastomère réticulable conforme à l'une des revendications précédentes, pour laquelle l'élastomère de type polymère de diène est choisi parmi les suivants : cis-1,4-polyisoprène, 3,4-polyisoprène, polybutadiène, copolymères d'isoprène et d'isobutène éventuellement halogénés, copolymères de 1,3-butadiène et d'acrylonitrile, copolymères de styrène et de 1,3-butadiène, copolymères de styrène, d'isoprène et de 1,3-butadiène, et copolymères de styrène, de 1,3-butadiène et d'acrylonitrile, ainsi que leurs mélanges.

11. Composition réticulable conforme à l'une des revendications précédentes, laquelle composition élastomère comprend au moins un polymère élastomère d'une ou de plusieurs monooléfine(s) et d'un comonomère oléfinique ou l'un de ses dérivés.

12. Composition élastomère réticulable conforme à la revendication 11, pour laquelle le polymère élastomère est choisi parmi les suivants : copolymères d'éthylène et de propylène (EPR), copolymères d'éthylène, de propylène et de diène (EPDM), polyisobutène, caoutchoucs butyl et caoutchoucs butyl halogénés, ainsi que leurs mélanges.

13. Composition élastomère réticulable conforme à l'une des revendications précédentes, pour laquelle l'agent de couplage de type silane est choisi parmi les silanes soufrés de formule (I) suivante :
Z-Alk-Sₙ-Alk-Z (I)
dans laquelle
- Z représente un groupe choisi parmi ceux de formules suivantes : - Si(R₁)₂(R₂), -Si(R₁)(R₂)₂, et -Si(R₂)₃, où R₁ représente un groupe alkyle en C₁₋₄, cyclohexyle ou phényle, et R₂ représente un groupe alcoxy en C₁₋₁₈ ou cycloalcoxy en C₅₋₈,
- Alk représente un groupe hydrocarboné divalent comportant de 1 à 18 atomes de carbone,
- et l'indice n est un nombre valant de 2 à 8.

14. Composition élastomère réticulable conforme à l'une des revendications 1 à 12, pour laquelle l'agent de couplage de type silane est choisi parmi les amino-silanes de formule (II) suivante : 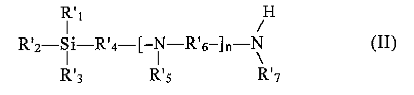 dans laquelle
- R'₁, R'₂ et R'₃ représentent des entités qui peuvent être identiques ou différentes et qui sont choisies parmi un atome d'hydrogène et les groupes alcoxy en C₁₋₈, alkyle en C₁₋₁₈, aryle en C₆₋₂₀, et alkyl-aryle ou aryl-alkyle en C₇₋₃₀, sous réserve qu'au moins l'un de ces symboles R'₁, R'₂ et R'₃ représente un groupe alcoxy,
- R'₄ représente une entité choisie parmi les groupes alcanediyle en C₁₋₈ et arènediyle en C₆₋₂₀, lesquels groupes arènediyle en C₆₋₂₀ peuvent, en option, porter des substituants alkyle en C₁₋₈,
- R'₅ et R'₇ représentent des entités qui peuvent être identiques ou différentes et qui sont choisies parmi un atome d'hydrogène et les groupes alkyle en C₁₋₁₈, ou bien, si R'₅ et R'₇ représentent autre chose que des atomes d'hydrogène, ils peuvent représenter des entités qui forment, conjointement avec les atomes d'azote auxquels elles sont liées, des hétérocycles à 5 ou 6 chaînons,
- R'₆ représente une entité choisie parmi les groupes alcanediyle en C₁₋₁₈, arènediyle en C₆₋₁₄, lesquels groupes arènediyle peuvent, en option, porter des substituants alkyle en C₁₋₁₈, alcanediyl-arènediyle ou arènediyl-alcanédiyle en C₇₋₃₀, et cycloalcanediyle en C₃₋₃₀, lesquels groupes cycloalcanediyle peuvent, en option, porter des substituants alkyle en C₁₋₁₈,
- et l'indice n est un nombre entier valant de 0 à 5, bornes comprises.

15. Composition élastomère réticulable conforme à l'une des revendications 1 à 12, pour laquelle l'agent de couplage de type silane est choisi parmi les vinyl-silanes de formule (III) suivante :
RSiR'ₙY₃₋ₙ (III)
dans laquelle
- R représente un groupe alcényle ou alcényl-oxy,
- R' représente un atome d'hydrogène ou un groupe alkyle,
- Y représente un groupe organique hydrolysable,
- et l'indice n vaut 0, 1 ou 2.

16. Composition élastomère réticulable conforme à l'une des revendications 1 à 12, pour laquelle l'agent de couplage de type silane est choisi parmi les mercapto-silanes de formule (IV) suivante : 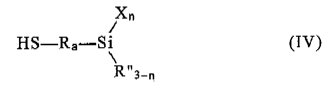 dans laquelle
- X représente un atome d'halogène choisi parmi les atomes de chlore, brome, iode et fluor, ou un groupe alcoxy en C₁₋₈,
- Rₐ représente un groupe alcanediyle en C₁₋₁₀,
- R" représente un groupe alkyle en C₁₋₃₀, un groupe alkyl-aryle ou aryl-alkyle en C₇₋₃₀, un groupe cycloaliphatique en C₅₋₃₀ ou un groupe aromatique en C₆₋₂₀,
- et l'indice n est un nombre entier valant de 1 à 3, bornes comprises.

17. Composition élastomère réticulable conforme à l'une des revendications 1 à 12, pour laquelle l'agent de couplage de type silane est choisi parmi les époxy-silanes tels que les 3-glycidyloxypropyl-triméthoxy-silane, 3-glycidyloxypropyl-méthyl-diméthoxy-silane ou 2-(3,4-époxycyclohexyl)-éthyl-triméthoxy-silane, ainsi que leurs mélanges.

18. Composition élastomère réticulable conforme à l'une des revendications précédentes, dans laquelle le caoutchouc vulcanisé sous forme divisée a subi un traitement de surface avec au moins un agent de couplage de type silane, employé en une proportion de 0,1 à 5 % en poids par rapport au poids total du caoutchouc vulcanisé sous forme divisée et de l'agent de couplage de type silane.

19. Composition élastomère réticulable conforme à la revendication 18, dans laquelle le caoutchouc vulcanisé sous forme divisée a subi un traitement de surface avec au moins un agent de couplage de type silane, employé en une proportion de 0,2 à 3 % en poids par rapport au poids total du caoutchouc vulcanisé sous forme divisée et de l'agent de couplage de type silane.

20. Composition réticulable conforme à l'une des revendications précédentes, pour laquelle l'agent de vulcanisation à base de soufre est choisi parmi :
- du soufre soluble (soufre cristallisé),
- du soufre insoluble (soufre polymère),
- du soufre en dispersion dans une huile,
- et des composés donneurs de soufre, tels les disulfure de tétraméthyl-thiurame (TMTD), disulfure de tétrabenzyl-thiurame (TBzTD), disulfure de tétraéthyl-thiurame (TETD), disulfure de tétrabutyl-thiurame (TBTD), disulfure de diméthyl-diphényl-thiurame (MPTD), tétrasulfure
ou hexasulfure de pentaméthylène-thiurame (DPTT), disulfure de morpholino-benzothiazole (MBSS), N-oxy-diéthylène-dithiocarbamoyl-N'-oxy-diéthylène-sulfénamide (OTOS), dithiobis(morpboline) (DTM ou DTDM), et disulfure de caprolactame (CLD).

21. Composition réticulable conforme à la revendication 20, dans laquelle l'agent de vulcanisation à base de soufre se trouve présent en une proportion de 0,5 à 5 pcpr.

22. Composition élastomère réticulable conforme à l'une des revendications précédentes, dans laquelle se trouve présente au moins une charge renforçante, en une proportion de 0,1 à 120 pcpr.

23. Composition réticulable conforme à la revendication 22, dans laquelle la charge renforçante est un noir de carbone.

24. Composition réticulable conforme à la revendication 22, dans laquelle la charge renforçante est une silice.

25. Composition réticulable conforme à la revendication 24, dans laquelle se trouve présent un agent de couplage de silice.

26. Composition réticulable conforme à la revendication 24, dans laquelle le caoutchouc vulcanisé sous forme divisée a subi un traitement de surface préalable avec au moins un agent de couplage de type silane.

27. Pneumatique pour roue de véhicule, comprenant au moins un élément de structure obtenu par réticulation d'une composition élastomère réticulable qui comprenait :
- au moins un caoutchouc vulcanisé sous forme divisée,
- au moins un élastomère de type polymère de diène,
- et au moins un agent de vulcanisation à base de soufre,
**caractérisé en ce que** ledit caoutchouc vulcanisé sous forme divisée avait subi un traitement de surface avec au moins un agent de couplage de type silane.

28. Pneumatique pour roue de véhicule, conforme à la revendication 27, qui comprend
- une structure de carcasse de forme sensiblement toroïdale, dont les bords opposés sont respectivement associés à des tringles de talon droit et de talon gauche, pour former les talons respectifs ;
- une structure de ceinture, placée en situation radialement externe par rapport à ladite structure de carcasse ;
- une bande de roulement, placée radialement par-dessus ladite structure de ceinture ;
- et une paire de flancs, placés latéralement sur les bords opposés de ladite structure de carcasse ;
et dans lequel ledit élément de structure obtenu par réticulation d'une composition élastomère réticulable qui comprenait :
- au moins un caoutchouc vulcanisé sous forme divisée, traité en surface avec au moins un agent de couplage de type silane ;
- au moins un élastomère de type polymère de diène,
- et au moins un agent de vulcanisation à base de soufre,
est la bande de roulement.

29. Pneumatique pour roue de véhicule, conforme à la revendication 27 ou 28, dans lequel le caoutchouc vulcanisé sous forme divisée était tel que défini dans l'une des revendications 2 à 9.

30. Pneumatique pour roue de véhicule, conforme à l'une des revendications 27 à 29, dans lequel l'élastomère de type polymère de diène était tel que défini dans l'une des revendications 10 à 12.

31. Pneumatique pour roue de véhicule, conforme à l'une des revendications 27 à 30, dans lequel l'agent de couplage de type silane était tel que défini dans l'une des revendications 13 à 19.

32. Pneumatique pour roue de véhicule, conforme à l'une des revendications 27 à 31, dans lequel l'agent de vulcanisation à base de soufre était tel que défini dans la revendication 20 ou 21.

33. Pneumatique pour roue de véhicule, conforme à l'une des revendications 27 à 32, dans lequel se trouvait présente, dans la composition élastomère réticulable, au moins une charge renforçante telle que définie dans l'une des revendications 22 à 26.

34. Produit manufacture réticulé, obtenu par réticulation d'une composition élastomère réticulable conforme à l'une des revendications 1 à 26.

35. Procédé de préparation d'une composition élastomère réticulable, qui comporte les étapes suivantes :
a) soumettre au moins un caoutchouc vulcanisé sous forme divisée à un traitement de surface réalisé avec au moins un agent de couplage de type silane ;
b) mélanger le caoutchouc vulcanisé sous forme divisée traité en surface, issu de l'étape (a), avec au moins un élastomère polymère de diène ;
c) et ajouter, à cette composition élastomère issue de l'étape (b), au moins un agent de vulcanisation à base de soufre.

36. Procédé conforme à la revendication 35, dans lequel l'étape (a) est effectuée à une température de 50 à 150 °C.

37. Procédé conforme à la revendication 35 ou 36, dans lequel la durée de l'étape (a) est de 5 à 30 minutes.

38. Procédé conforme à la revendication 35, dans lequel ledit caoutchouc vulcanisé sous forme divisée est chauffé à une température de 50 à 150 °C, avant qu'on y ajoute l'agent de couplage de type silane.

39. Procédé conforme à l'une des revendications 35 à 38, dans lequel l'étape (b) est effectuée à une température de 100 à 180°C.

40. Procédé conforme à l'une des revendications 35 à 39, dans lequel la durée de l'étape (b) est de 2 à 30 minutes.

41. Procédé conforme à l'une des revendications 35 à 40, dans lequel l'étape (c) est effectuée à une température de 80 à 120 °C.

42. Procédé conforme à l'une des revendications 35 à 41, dans lequel la durée de l'étape (c) est de 2 à 30 minutes.

43. Procédé conforme à l'une des revendications 35 à 42, dans lequel le caoutchouc vulcanisé sous forme divisée est tel que défini dans l'une des revendications 2 à 9.

44. Procédé conforme à l'une des revendications 35 à 43, dans lequel l'élastomère de type polymère de diène est tel que défini dans l'une des revendications 10 à 12.

45. Procédé conforme à l'une des revendications 35 à 44, dans lequel l'agent de couplage de type silane est tel que défini dans l'une des revendications 13 à 19.

46. Procédé conforme à l'une des revendications 35 à 45, dans lequel l'agent de vulcanisation à base de soufre est tel que défini dans la revendication 20 ou 21.
